Europäisches Patentamt

European Patent Office

Office européen des brevets

(19)

(11) EP 0 930 627 A1

## (12) DEMANDE DE BREVET EUROPEEN

(43) Date de publication:
21.07.1999 Bulletin 1999/29

(51) Int Cl.⁶: H01G 9/058

(21) Numéro de dépôt: 98403234.2

(22) Date de dépôt: 21.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 30.12.1997 FR 9716663

(71) Demandeur: ALCATEL
75008 Paris (FR)

(72) Inventeurs:
• Danel, Véronique
86280 St. Benoit (FR)
• Flipo, Jean-Pierre
86000 Poitiers (FR)
• Andrieu, Xavier
91220 Bretigny sur Orge (FR)
• Pichon, Bernadette
78140 Velizy Villacoublay (FR)
• Barusseau, Sylvie
91220 Bretigny sur Orge (FR)

(74) Mandataire: Feray, Valérie
COMPAGNIE FINANCIERE ALCATEL
Dépt. Propriété Industrielle,
30, avenue Kléber
75116 Paris (FR)

(54) **Supercondensateur à electrolyte non aqueux et à electrode de charbon actif.**

(57) L'invention concerne un supercondensateur comprenant un électrolyte non aqueux et deux électrodes de carbone contenant chacune un liant et une matière électrochimiquement active qui est du charbon actif de surface spécifique supérieure à environ 2 000 m2/g.

Ce liant comprend un mélange de carboxyméthylcellulose et d'un copolymère de styrène et de butadiène.

EP 0 930 627 A1

**Description**

La présente invention concerne un supercondensateur comprenant un électrolyte non aqueux et des électrodes de charbon actif de très grande surface spécifique.

Les supercondensateurs sont des dispositifs de stockage d'énergie de haute capacité massique (de l'ordre de quelques dizaines à une centaine de F/g de matière active) et de haute puissance spécifique instantanée.

Un supercondensateur comprend deux électrodes identiques encadrant un séparateur perméable aux ions de l'électrolyte. On en distingue trois types selon la constitution de leurs électrodes et de la nature de leur électrolyte :

- les supercondensateurs à électrolyte organique et à électrodes de charbon actif ayant une grande surface spécifique, comprise entre 1 000 m$^2$/g et 3 000 m$^2$/g, dont le fonctionnement est électrostatique ;
- les supercondensateurs à électrolyte aqueux et à électrodes d'oxydes de métaux de transition, dont le fonctionnement est essentiellement basé sur des réactions électrochimiques de surface, la surface spécifique moyenne des oxydes utilisés est de 100 m$^2$/g ;
- les supercondensateurs à électrodes de polymères conducteurs électroniques tels que le polypyrrole ou la polyaniline.

Les électrodes de charbon actif d'un supercondensateur à électrolyte non aqueux classique sont des électrodes minces obtenues par dépôt d'une pâte sur un collecteur de courant. La pâte est un mélange d'une matière active, d'un diluant et d'un liant. Le polytétrafluoréthylène (PTFE) est utilisé communément comme liant d'électrode.

Le liant doit assurer la cohésion des particules de charbon actif, qui est sous forme pulvérulente, sans masquer une part importante de la surface active.

Le liant doit également permettre l'adhésion de la matière active sur le collecteur de courant.

Le liant doit conférer une certaine souplesse à l'électrode notamment lors de son assemblage et de son fonctionnement.

Le liant doit être inerte vis-à-vis des constituants de l'électrolyte.

Enfin, le liant isolant doit permettre la percolation du courant entre les grains de charbon actif.

Dans les supercondensateurs à électrode de charbon actif, il est essentiel que le liant n'interagisse pas trop avec les grains de charbon actif, afin de ne pas diminuer la surface active. Un compromis est à trouver pour que le liant assure cependant la cohésion des grains de matière active.

L'objectif de la présente invention est de fournir un supercondensateur à électrodes de charbon actif ayant une capacité massique élevée de l'ordre d'une centaine de F/g de matière active ou plus, et une résistance interne la plus faible possible.

Bispo et al. ont cherché (ECS Fall Meeting, Oct. 1995, p.47) à minimiser la résistance interne d'un supercondensateur dont les électrodes sont constituées d'un collecteur de courant recouvert d'une couche de graphite puis d'une couche de graphite mélangé à du charbon actif Norit®.

Le Norit® est un charbon actif d'une surface spécifique moyenne de l'ordre de 1 100 m$^2$/g.

Les particules de matières actives, graphite et Norit®, sont agglomérées par un liant.

Bispo et al. décrivent que le polytétrafluoréthylène (PTFE), utilisé communément comme liant, donne de mauvais résultats en terme de résistance interne.

Bispo et al. ont montré que les liants cellulosiques comme la méthylcellulose (MC) ou encore la carboxyméthylcellulose (CMC), permettent de diminuer notablement la résistance interne du supercondensateur décrit ci-dessus.

En particulier, un supercondensateur dont les électrodes contiennent chacune 15% en poids de CMC, présente une capacité de 60F/g de matière active et une résistance interne de 0,3Ω/dm$^2$.

La Demanderesse, ayant pour objectif d'augmenter la capacité massique des supercondensateurs à électrodes de charbons actifs connus, a mis en oeuvre des charbons actifs de surface spécifique élevée, i.e. supérieure à environ 2000 m$^2$/g.

La Demanderesse s'est fixée comme deuxième objectif que le supercondensateur à électrode de charbon actif 2 000m$^2$/g ait une résistance interne la plus faible possible.

La Demanderesse a découvert qu'un liant à base de CMC ne donnait pas de bons résultats avec un charbon actif de surface spécifique supérieure à environ 2 000m$^2$/g parce que la CMC a un pouvoir couvrant ou filmogène trop élevé et masque une part trop importante de la surface active, si bien que la résistance interne du supercondensateur est trop élevée.

La Demanderesse a constaté qu'un liant à base de copolymère styrène/butadiène assure une bonne cohésion du charbon actif de surface spécifique supérieure à environ 2 000m$^2$/g mais ne peut être mis en oeuvre car il ne présente aucune adhérence avec le collecteur de courant.

La présente invention vise donc à obtenir un supercondensateur, caractérisé par une faible résistance interne et une capacité élevée, comportant un électrolyte non aqueux et des électrodes contenant

- du charbon actif de surface spécifique élevée, et
- un liant qui allie l'ensemble des propriétés présentées plus haut.

C'est pourquoi la présente invention a pour objet un supercondensateur comprenant un électrolyte non aqueux et deux électrodes de carbone contenant chacun un liant et une matière électrochimiquement active qui est du charbon actif de surface spécifique supérieure à environ 2 000m²/g, caractérisé en ce que ledit liant comprend un mélange de carboxyméthylcellulose et d'un copolymère de styrène et de butadiène.

Le liant CMC + SBR de l'invention permet d'améliorer la capacité massique du supercondensateur et de diminuer sa résistance interne tout en conservant les propriétés d'adhérence des liants de l'art antérieur, comme la CMC et le PTFE.

Le liant du supercondensateur selon l'invention contient avantageusement une combinaison de CMC pour conférer l'adhérence entre les grains de charbon actif et d'un copolymère de styrène et de butadiène pour conférer la souplesse à l'électrode.

La CMC utilisée dans le cadre de la présente invention a de préférence un poids moléculaire moyen compris entre environ 300 000 et 450 000. Son degré de polymérisation est avantageusement de l'ordre de 1 500 à 2 000.

Le liant contient, de préférence, entre 25% et 75% en poids de copolymère styrène-butadiène, et entre 25% et 75% en poids de carboxy-méthylcellulose par rapport à 100% en poids des deux polymères.

L'électrode contient avantageusement au moins 80% en poids de charbon actif et de 2% à 20% en poids de liant, de préférence 4% à 10% en poids de liant.

Ladite électrode peut être obtenue selon le procédé décrit ci-après.

La première étape de ce procédé consiste en la fabrication d'une pâte à partir de charbon actif et du liant mis en solution dans l'eau.

Les étapes suivantes consistent en l'étalement de la pâte sur un feuillard métallique en aluminium, suivi d'un séchage en étuve puis d'un calandrage jusqu'à obtention de la porosité désirée, supérieure à 50%, de préférence de l'ordre de 70%-80%.

L'électrolyte non aqueux du supercondensateur selon l'invention contient une solution d'un sel conducteur dissous dans un solvant choisi parmi le carbonate de propylène, le carbonate d'éthylène, le carbonate de butylène, la gamma-butyrolactone, la gamma-valérolactone, l'acétonitrile, le propionitrile, le glutaronitrile, l'adiponitrile, le méthoxyacétonitrile, la N,N-diméthylformamide, la N,N-diméthylacétamide, la N-méthylpyrrolidone, la N-méthyloxazolidinone, le nitrométhane, le nitroéthane, le sulfonane, le 3-méthylsulfonane, la diméthylsulfoxyde, le triméthylphosphate et leurs mélanges.

Le sel conducteur est de préférence un sel d'ammonium quaternaire, l'anion étant choisi parmi $BF_4^-$ et $PF_6^-$. L'ammonium quaternaire est de préférence choisi parmi $Me_4N^+$, $Et_4N^+$, $Pr_4N^+$ et $Bu_4N^+$.

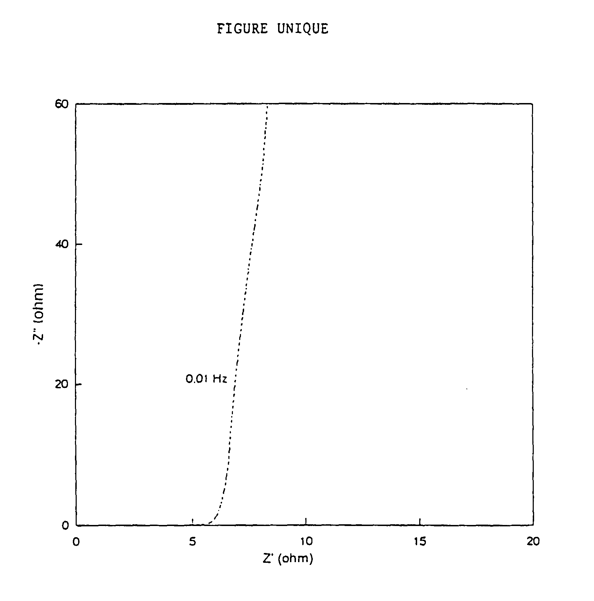

D'autres caractéristiques et avantages de la présente invention apparaîtront à la lecture des exemples suivants, donnés à titre illustratif mais non limitatif, en référence à la figure qui représente la courbe d'impédance d'un supercondensateur selon l'invention.

L'axe des abscisses et des ordonnées représentent respectivement la partie réelle et la partie complexe de la résistance interne du supercondensateur, mesurée en Ω à une fréquence de 0,01 Hz.

EXEMPLE 1:

Une solution à 2% en CMC dans l'eau est préparée en mélangeant 2g de CMC à 98g d'eau. La CMC choisie a un poids moléculaire d'environ 400 000.

10 g de cette solution sont ajoutés à 0,2g d'une solution à 51% en SBR dans l'eau. On ajoute ensuite 4,7g de charbon actif MAXSORB MSC 25® fourni par la société KANSAÏ et présentant une surface spécifique de 2 500m2/g, ainsi que la quantité d'eau appropriée pour obtenir la viscosité nécessaire à un bon empâtage.

L'électrode ainsi préparée contient 6% de liant.

Deux électrodes obtenues selon cette méthode sont montées en cellule bouton, en utilisant comme électrolyte du tétraéthylammonium tétrafluorobororate en concentration 1mol/l dans l'acétonitrile.

La courbe d'impédance de la cellule bouton est présentée sur la figure.

La capacité de la cellule bouton obtenue est de 140F/g, et sa résistance interne mesurée à 0,01Hz est de 7Ω (0,14Ω/dm²).

EXEMPLE 2 :

Une solution à 2% en CMC dans l'eau est préparée en mélangeant 2g de CMC à 98g d'eau. La CMC choisie a un poids moléculaire d'environ 400 000.

5g de cette solution sont ajoutés à 0,4g d'une solution à 51% en SBR dans l'eau. On ajoute ensuite 4,7g de charbon actif MAXSORB MSC 25® fourni par la société KANSAÏ et présentant une surface spécifique de 2 500m²/g, ainsi que la quantité d'eau appropriée pour obtenir la viscosité nécessaire à un bon empâtage.

On utilise le même électrolyte que dans l'exemple 1.

La capacité de la cellule bouton obtenue est de 150F/g et sa résistance interne mesurée à 0,01Hz est de 7Ω (0,14Ω/dm²).

EXEMPLE 3 :

On montre une cellule bouton comme décrit dans l'exemple 1 en préparant deux électrodes contenant 4% de liant CMC et 96% de charbon de 2 500m²/g.

La capacité de la cellule est de 110F/g, et sa résistance interne mesurée à 0,01 Hz est de 16Ω (0,32Ω/dm²).

EXEMPLE 4 :

On prépare une électrode comme décrit dans l'exemple 1 contenant 15% de liant SBR et 85% de charbon de 2 500m$^2$/g.

La matière active n'adhère pas au support, que le support soit un feuillard métallique ou bien un métal déployé. Ceci rend impossible la mesure de la résistance interne.

**Revendications**

1. Supercondensateur comprenant un électrolyte non aqueux et deux électrodes de carbone contenant chacune un liant et une matière électrochimiquement active qui est du charbon actif de surface spécifique supérieure à environ 2 000m$^2$/g, caractérisé en ce que ledit liant comprend un mélange de carboxyméthylcellulose et d'un copolymère de styrène et de butadiène.

2. Supercondensateur selon la revendication 1, caractérisé en ce que le liant comprend 25% à 75% en poids de carboxyméthylcellulose et 25% à 75% en poids de copolymère par rapport à 100% du poids des deux polymères.

3. Supercondensateur selon l'une des revendications précédentes, caractérisé en ce que l'électrode contient 2% à 20% en poids de liant.

4. Supercondensateur selon la revendication 3, caractérisé en ce que l'électrode contient 4% à 10 % en poids de liant.

5. Supercondensateur selon l'une des revendications précédentes, caractérisé en ce que l'électrolyte est un sel d'ammonium quaternaire, l'anion étant choisi parmi $BF_4^-$ et $PF_6^-$.

FIGURE UNIQUE

Office européen
des brevets

**RAPPORT DE RECHERCHE EUROPEENNE**

Numéro de la demande
EP 98 40 3234

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 680 061 A (TDK CORPORATION) 2 novembre 1995 <br> * page 3, ligne 38 - ligne 43 * <br> * page 5, ligne 44 - ligne 49 * <br> * page 8, ligne 17 - ligne 30 * <br> * page 9, ligne 5 * <br> * page 9, ligne 18 - ligne 20 * <br> ----- | 1-4 | H01G9/058 |

**DOMAINES TECHNIQUES RECHERCHES (Int.Cl.6)**

H01G
H01M

Le présent rapport a été établi pour toutes les revendications

| Lieu de la recherche | Date d'achèvement de la recherche | Examinateur |
|---|---|---|
| LA HAYE | 25 février 1999 | GOOSSENS, A |

EP 0 930 627 A1

**ANNEXE AU RAPPORT DE RECHERCHE EUROPEENNE
RELATIF A LA DEMANDE DE BREVET EUROPEEN NO.**     EP 98 40 3234

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-02-1999

| Document brevet cité au rapport de recherche | Date de publication | Membre(s) de la famille de brevet(s) | Date de publication |
|---|---|---|---|
| EP 680061 A | 02-11-1995 | JP 7302735 A | 14-11-1995 |